# EUROPEAN PATENT SPECIFICATION

(11) **EP 4 109 660 B1**
(45) Date of publication and mention of the grant of the patent: **25.02.2026**
(21) Application number: 21856150.4
(22) Date of filing: 06.08.2021
(51) Int. Cl.: H01M 50/446, H01M 50/449, H01M 50/46, H01M 10/052, H01M 50/414, H01M 50/403

(54) **HIGHLY ADHESIVE BATTERY SEPARATOR COMPRISING PVAC-PMA COPOYLMER, AND SECONDARY BATTERY COMPRISING SAME**
STARK HAFTENDER BATTERIESEPARATOR MIT PVAC-PMA-COPOLYMER UND SEKUNDÄRBATTERIE DAMIT
SÉPARATEUR DE BATTERIE HAUTEMENT ADHÉSIF COMPRENANT UN COPOLYMÈRE PVAC-PMA, ET BATTERIE SECONDAIRE LE COMPRENANT

(30) Priority: 13.08.2020 KR 20200101572
(43) Date of publication of application: 28.12.2022
(73) Proprietor: LG Energy Solution, Ltd., Seoul 07335 (KR)
(72) Inventor: KIM, Min Ji, Daejeon 34122 (KR); JEONG, So Mi, Daejeon 34122 (KR); HAN, Da Kyung, Daejeon 34122 (KR)
(74) Representative: Hoffmann Eitle
(86) International application number: PCT/KR2021/010444
(87) International publication number: WO 2022/035144

(56) References cited:
- CN-A- 108 963 164
- KR-A- 20150 050 131
- KR-A- 20150 059 621
- KR-A- 20190 079 544
- KR-A- 20200 036 648
- KR-A- 20200 036 803
- US-A1- 2011 229 768
- US-A1- 2017 149 039
- NICOLAS FEDELICH: "Application Handbook Thermal Analysis of Polymers Selected Applications Thermal Analysis", 1 January 2013 (2013-01-01), XP055608279, Retrieved from the Internet <URL:https://www.mt.com/dam/LabDiv/guides-glen/ta-polymer/TA_Polymers_Selected_Apps_EN.pdf> [retrieved on 20190724]

## Description

### [Technical Field]

This application claims the benefit of priority to Korean Patent Application No. 2020-0101572 filed on August 13, 2020.

The present invention relates to a high-adhesion separator for batteries including a PVAc-PMA copolymer and a secondary battery including the same. More particularly, the present invention relates to a high-adhesion separator for batteries, the high-adhesion separator including a porous substrate and a coating layer formed on at least one surface of the porous substrate, the coating layer including an inorganic material, wherein the coating layer includes a copolymer of a humidification phase separable polymer and vinyl acetate, and a secondary battery including the same.

### [Background Art]

A secondary battery includes an electrode assembly that has a positive electrode/separator/negative electrode structure and that is capable of being charged and discharged. Each of the positive electrode and the negative electrode is manufactured by applying a slurry including an electrode active material to one surface or opposite surfaces of a metal current collector and drying and rolling the same. The separator is made of a porous substrate, or includes a coating layer formed on at least one surface of the porous substrate in order to improve performance of the porous substrate or to remedy shortcomings of the porous substrate.

The separator serves to isolate the positive electrode and the negative electrode from each other, thereby preventing electric short circuit between the two electrodes, and to allow an electrolyte and ions to pass therethrough. The separator itself does not participate in electrochemical reaction of a battery. However, the separator is an important element that affects the performance and safety of the battery due to physical properties thereof, such as electrolytic solution wettability and porosity. In this specification, the "separator" is defined to include a porous substrate and a coating layer that may be applied to one surface thereof, the "porous substrate" is defined to be only a porous substrate including no coating layer.

In general, lithium ions move from the positive electrode to the negative electrode via the separator when the secondary battery is charged. For smooth movement of the lithium ions, therefore, the state in which the positive electrode, the separator, and the negative electrode are attached to each other must be maintained. If the force of adhesion between the positive electrode and the separator and between the negative electrode and the separator is not sufficient, a phenomenon in which the positive electrode, the separator, and the negative electrode are separated from each other may occur during a process of manufacturing the secondary battery, during use of the secondary battery, or due to external impact. Such a phenomenon frequently occurs when pluralities of positive electrodes, separators, and negative electrodes are used or when a battery having a large size or a large capacity is used. For a high-capacity battery, therefore, it is necessary to increase the force of adhesion between the positive electrode and the separator and between the negative electrode and the separator.

In the case in which a large amount of a binder is used, the binder acts as a resistor of the secondary battery, whereby performance of the battery may be reduced. Particularly, in the case in which the amount of the binder added to the coating layer of the separator is too large, the binder blocks pores of the separator, whereby impregnability of the separator with the electrolytic solution is reduced and resistance in the secondary battery is increased. In addition, the capacity of the battery is reduced while the lifespan of the battery is reduced due to the increased amount of the binder.

In the case in which a binder having high adhesive force is used, the amount of the binder that is used may be reduced. PVdF-HFP is mainly used as a conventional separator; however, the adhesive force of the binder is merely a maximum of 100 gf/25mm at 60°C and 6.5 MPa. Therefore, much research on polyvinyl acetate, which has a low glass transition temperature and thus has an adhesive force of 300 gf/25mm at 60°C and 6.5 MPa, has been conducted.

However, polyvinyl acetate has lower humidification phase separation characteristics than a PVdF-based binder. In the case in which polyvinyl acetate alone is applied to an SRS coating layer, therefore, it is difficult to form an adhesive layer on the surface of the separator.

In order to solve this problem, Patent Document 1 discloses mixing of a humidification phase separable binder and polyvinyl acetate. However, miscibility between the humidification phase separable binder and polyvinyl acetate is reduced under humidification conditions, whereby a phase separation effect is not great.

Patent Document 2 discloses copolymerization of vinyl acetate and a methacrylate monomer. In this document, hardness of the methacrylate monomer is considered; however, humidification phase separation of polyvinyl acetate is not considered.

Therefore, a construction for improving humidification phase separation characteristics of polyvinyl acetate is necessary.

Patent Document 3 describes an electrode-composite separator assembly for a lithium battery, including an electrode, and a composite separator including a separator and a coating film disposed on a surface of the separator, wherein the coating film.

Patent Document 4 concerns an inorganic ceramic-coated functionalized lithium ion battery isolation film and a preparation method thereof.

Patent Document 5 relates to a microporous polyolefin membrane modified by an aqueous polymer.

### (Prior Art Documents)

(Patent Document 1) Korean Patent Application Publication No. 2020-0036803 (2020.04.07)
(Patent Document 2) Korean Patent Application Publication No. 2015-0106808 (2015.09.22)
(Patent Document 3) US 2017/0149039 A1
(Patent Document 4) CN 108963164A (Patent Document 5) US 2011/0229768 A1

### [Disclosure]

### [Technical Problem]

The present invention has been made in view of the above problems, and it is an object of the present invention to provide a high-adhesion separator for batteries configured such that humidification phase separation characteristics of vinyl acetate are improved when a coating layer is formed on one surface of the separator while high adhesive force of vinyl acetate is maintained and a secondary battery including the same.

### [Technical Solution]

In order to accomplish the above object, the present invention provides a high-adhesion separator for batteries, the high-adhesion separator including a porous substrate and a coating layer formed on at least one surface of the porous substrate, the coating layer including an inorganic material and a binder, wherein the binder includes a copolymer of a humidification phase separable polymer and vinyl acetate; and
wherein the copolymer has a structure of Chemical Formula 1 below: 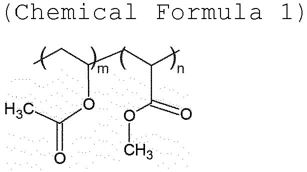
where m:n is 80:20 to 20:80.

The humidification phase separable polymer may include at least one selected from the group consisting of poly(methyl acrylate), poly(methyl methacrylate), poly(ethyl methacrylate), poly(2-hydroxyethyl methacrylate), and poly(acrylonitrile).

The humidification phase separable polymer may have a glass transition temperature of 100°C or less, and vinyl acetate may have a glass transition temperature of 10°C to 60°C. In the present invention, glass transition temperature may be measured using a DSC method.

The copolymer may be manufactured through copolymerization of the humidification phase separable polymer to vinyl acetate in a weight ratio of 80:20 to 20:80. At this time, the glass transition temperature of the copolymer may be 60°C or less, preferably 40°C or less.

The copolymer may be a block copolymer.

Vinyl acetate may have an adhesive force of 200 gf/25mm or more under conditions of 60°C and 6.5 MPa.

The humidification phase separable polymer may be phase-separated at a temperature of 25°C to 80°C and a relative humidity of 40% to 80%.

The copolymer has a structure of Chemical Formula 1 below.

Structure of Chemical Formula 1 is as follows. 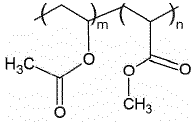 Here, m:n is 80:20 to 20:80, and the weight average molecular weight may be 100,000 to 500,000.

The composition ratio between the inorganic material to the copolymer in the coating layer may be 60:40 to 90:10.

The present invention provides a secondary battery including a positive electrode, a negative electrode, and the separator.

The separator comprises a coating layer facing the positive electrode and a coating layer facing the negative electrode, wherein the coating layer facing the positive electrode and the coating layer facing the negative electrode may have different constituents.

At this time, the copolymer may be included in only the coating layer facing the positive electrode.

In addition, the coating layer facing the positive electrode and the coating layer facing the negative electrode may be different in composition ratio of constituents from each other.

The coating layer facing the positive electrode may include a larger amount of the copolymer than the coating layer facing the negative electrode.

The force of adhesion between the separator and the negative electrode may be 50 gf/25mm or more under conditions of 60°C and 6.5 MPa.

In the present invention, one or more constructions that do not conflict with each other may be selected and combined from among the above constructions.

### [Advantageous effects]

As is apparent from the above description, a binder having high adhesive force is used for a separator according to the present invention, whereby the force of adhesion between a positive electrode and the separator and between a negative electrode and the separator is increased. In addition, a phenomenon of separation between vinyl acetate and a humidification phase separable polymer does not occur under a humidification condition, whereby the binder assists in forming an asymmetric structure with high porosity in a coating layer while being uniformly distributed.

In addition, since the binder having high adhesive force is used, consumption of the binder is lower than a conventional binder, whereby impregnability of the separator is improved and the capacity and lifespan of a secondary battery are increased.

In addition, the amount of an inorganic material in the coating layer may be increased, compared to the conventional art, whereby it is possible to obtain a separator having a thin coating layer while achieving a desired effect of the inorganic material. As a result, the density of the secondary battery is also increased.

### [Description of Drawings]

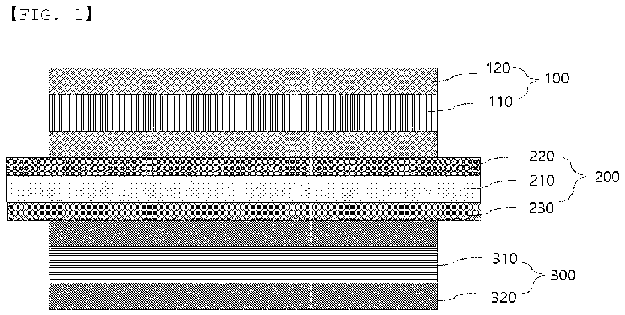

FIG. 1 is a side view of an electrode assembly including a positive electrode, a separator, and a negative electrode according to the present invention.

### [Best Mode]

Now, preferred embodiments of the present invention will be described in detail with reference to the accompanying drawings such that the preferred embodiments of the present invention can be easily implemented by a person having ordinary skill in the art to which the present invention pertains. In describing the principle of operation of the preferred embodiments of the present invention in detail, however, a detailed description of known functions and configurations incorporated herein will be omitted when the same may obscure the subject matter of the present invention.

In the case in which one part is said to be connected to another part in the entire specification, not only may the one part be directly connected to the other part, but also, the one part may be indirectly connected to the other part via a further part. In addition, that a certain element is included does not mean that other elements are excluded, but means that such elements may be further included unless mentioned otherwise.

Hereinafter, the present invention will be described in more detail.

A high-adhesion separator for batteries according to the present invention includes a porous substrate and a coating layer formed on at least one surface of the porous substrate, the coating layer including an inorganic material and a binder. The binder includes a copolymer of a humidification phase separable polymer and vinyl acetate; and
wherein the copolymer has a structure of Chemical Formula 1 below: 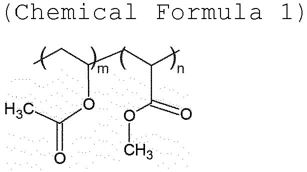
where m:n is 80:20 to 20:80.

### Porous substrate

The porous substrate electrically insulates a positive electrode and a negative electrode from each other, thereby preventing short circuit, and provides a movement path of lithium ions. A porous film having high resistance to an electrolytic solution, which is an organic solvent, and a very small pore diameter may be used. The porous substrate is not particularly restricted as long as the porous substrate can generally be used as the material for a separator of a secondary battery. For example, the porous substrate may include a resin, such as a polyolefin-based resin (polyethylene, polypropylene, polybutene, polyisobutylene, or polymethylpentene), polyvinyl chloride, or a mixture or copolymer thereof, or may include a resin, such as polyethylene terephthalate, polycycloolefin, polyethersulfone, polyamide, polyimide, polyimide-amide, polyaramide, polycycloolefin, nylon, or polytetrafluoroethylene. Thereamong, the polyolefin-based resin is preferably used, since applicability of a slurry for porous coating layers is high and the thickness of a separator for secondary batteries is reduced, whereby the percentage of an electrode active material layer in the battery is increased and thus the capacity per unit volume thereof is increased.

The thickness of the porous substrate may be 1 µm to 100 µm, specifically 1 µm to 30 µm.

Both a dry porous substrate and a wet porous substrate may be used as the porous substrate. The wet porous substrate has an advantage in that mechanical strength of the wet porous substrate is high, whereby short circuit less frequently occurs even though the wet porous substrate is formed so as to be thin.

### Coating layer

Although the thickness of the coating layer is not particularly restricted, the thickness of the coating layer may be 1 µm to 2 µm in consideration of improvement in density of the battery and improvement in properties of the separator. If the thickness of the coating layer is less than 1 µm, it is difficult to obtain a desired effect as the coating layer, which is undesirable. If the thickness of the coating layer is greater than 2 µm, performance of the battery is abruptly reduced, compared to the effect as the coating layer, which is also undesirable.

The density of the coating of the separator according to the present invention may be 2 g/m³ or less. If the density of the coating is greater than 2 g/m³, an electrolytic solution impregnation rate is abruptly reduced, which is undesirable.

The coating layer may be formed on the surface of the porous substrate that faces the positive electrode, the surface of the porous substrate that faces the negative electrode, or both the surface of the porous substrate that faces the positive electrode and the surface of the porous substrate that faces the negative electrode. In consideration of the force of adhesion between the separator and the positive electrode and between the separator and the negative electrode, it is preferable for the coating layer to be formed on opposite surfaces of the porous substrate.

Although the coating layer may be formed using various methods, the coating layer may be formed using a humidification phase separation method, which is advantageous to high porosity and asymmetric structure formation. A method of impregnating the porous substrate with a slurry obtained by adding a coating composition including an inorganic material described below and a binder to a solvent or applying the slurry to the porous substrate may be used. Any of ordinary coating methods well-known in the art to which the present invention pertains may be used as the application or coating method. For example, dip coating, die coating, roll coating, comma coating, or a combination thereof may be used.

After the coating layer is formed on the porous substrate, a step of drying the coating layer is performed. The drying step may be performed using an oven or a heated type chamber within a temperature range set in consideration of vapor pressure of the solvent, or the porous substrate having the coating layer formed thereon may be exposed to room temperature such that the solvent volatilizes. At this time, conditions, such as a temperature range of 25°C to 100°C and a relative humidity of 40% or more, may be considered.

Any of ordinary solvents known in the art to which the present invention pertains may be used without limitation as the solvent necessary to manufacture the separator according to the present invention. Preferably, acetone, tetrahydrofuran, acetonitrile, dimethylformamide, dimethylsulfoxide, dimethylacetamide, N-methyl pyrrole, or water is used. A mixture of two or more thereof may also be used.

### Inorganic material

The inorganic material added to the coating layer functions to increase mechanical strength of the separator. The inorganic material is not particularly restricted as long as the inorganic material provides a uniform thickness to the coating layer and does not undergo oxidation and/or reduction within an operation voltage range of a secondary battery to which the present invention is applied. Particularly, in the case in which inorganic particles having ion transfer ability are used, ionic conductivity of an electrochemical device may be improved, whereby performance of the battery may be improved. Also, in the case in which inorganic particles having high permittivity are used as the inorganic particles, the degree of dissociation of electrolyte salt, e.g. lithium salt, in a liquid electrolyte may be increased, whereby ionic conductivity of the electrolytic solution may be improved.

In recent years, a metal, a metal oxide, or a metal hydroxide have been used as the inorganic material in order to improve flame retardancy of the battery, although alumina (Al₂O₃) was mainly used as the inorganic material. In the separator according to the present invention, any one of alumina, a metal, a metal oxide, metal hydroxide, and a metal hydrate may be used as the inorganic material, or a mixture of two or more materials irrespective of the kind thereof may be used as the inorganic material.

The metal hydroxide or the metal hydrate may be any one or a combination of two or more selected from the group consisting of aluminum hydroxide (Al(OH)₃), magnesium hydroxide (Mg(OH)₂), aluminum oxyhydroxide (AlO(OH)), CaO·Al₂O₃·6H₂O, calcium hydroxide, chromium hydroxide, nickel hydroxide, and boron hydroxide.

The kind of the metal oxide is not particularly restricted. For example, at least one selected from the group consisting of a metal oxide having a permittivity constant of 5 or more, a metal oxide having piezoelectricity, and a metal oxide having lithium ion transfer ability may be used.

The metal oxide having a permittivity constant of 5 or more may be SrTiO₃, SnO₂, CeO₂, MgO, NiO, CaO, ZnO, ZrO₂, Y₂O₃, Al₂O₃, or TiO₂.

The metal oxide having piezoelectricity, in which a potential difference is formed due to a positive charge and a negative charge generated between opposite surfaces of a particle when predetermined pressure is applied thereto, may be at least one selected from the group consisting of BaTiO₃, Pb(Zr, Ti)O₃ (PZT), Pb₁₋ₓLaₓZr₁-_{y}Ti_{y}O₃ (PLZT), Pb (Mg_{⅓}Nb_{2/3}) O₃-PbTiO₃ (PMN-PT), hafnia (HfO₂), and a mixture thereof.

The metal oxide having lithium ion transfer ability, which contains a lithium element but moves lithium ions without storage of lithium, may be at least one selected from the group consisting of lithium phosphate (Li₃PO₄), lithium titanium phosphate (LiₓTi_{y}(PO₄)₃, 0<x<2, 0<y<3), lithium aluminum titanium phosphate (LiₓAl_{y}Ti_{z}(PO₄)₃, 0<x<2, 0<y<1, 0<z<3), (LiAlTiP)ₓO_{y}-based glass (0<x<4, 0<y<13), such as 14Li₂O-9Al₂O₃-38TiO₂-39P₂O₅, lithium lanthanum titanate (LiₓLa_{y}TiO₃, 0<x<2, 0<y<3), lithium germanium thiophosphate (LiₓGe_{y}P_{z}S_{w}, 0<x<4, 0<y<1, 0<z<1, 0<w<5) , such as Li_{3.25}Ge_{0.25}P_{0.75}S₄, and a mixture thereof.

Additionally, at least one selected from the group consisting of lithium nitride (LiₓN_{y}, 0<x<4, 0<y<2), such as Li₃N, SiS₂-based glass (LiₓSi_{y}S_{z}, 0<x<3, 0<y<2, 0<z<4), such as Li₃PO₄-Li₂S-SiS₂, P₂S₅-based glass (LiₓP_{y}s_{z}, 0<x<3, 0<y<3, 0<z<7), such as LiI-Li₂S-P₂S₅, and a mixture thereof may be further included in addition to the metal oxide.

Although the particle size of the inorganic material is not particularly restricted, D50 may have a range of 20 nm to 10 µm, specifically 100 nm to 1 µm, in consideration of the purpose to form a coating layer having a uniform thickness and to provide appropriate porosity.

In a particle size distribution curve of particles, D50 means the particle size of particles equivalent to 50% of the accumulated number of particles, and the average particle size of the inorganic particles was measured using a Particle Size Analyzer (Product Name: MASTERSIZER 3000; Manufacturer: Malvern).

The content of the inorganic material may be 1 weight% to 99 weight%, preferably 50 weight% to 99 weight%, based on the weight of the entire solid content of the coating layer excluding an additive, such as a dispersant. If the content of the inorganic material is less than 1 weight% based on the weight of the entire solid content of the coating layer excluding the additive, such as the dispersant, it is difficult to obtain a desired effect, and the number of empty spaces formed between inorganic particles is reduced by the binder. As a result, the pore size and porosity of the coating layer may be reduced, and therefore performance of the battery may be reduced. If the content of the inorganic material is greater than 99 weight% based on the weight of the entire solid content of the coating layer excluding the additive, such as the dispersant, the content of the binder is too small, whereby the force of adhesion between the inorganic particles may be reduced, and therefore the inorganic coating layer may be separated from the porous substrate or an uncoated region may be generated at the time of coating, which is also undesirable.

### Dispersant

The coating layer may further include a dispersant in order to further improve dispersibility of the inorganic material. The dispersant serves to maintain the state in which the inorganic material is uniformly dispersed in the binder at the time of manufacturing a coating layer slurry. For example, an anionic surfactant may be used in order to maintain uniform dispersion while increasing dispersibility.

An anionic component containing at least one selected from the group consisting of carboxylate, phosphate, sulfonate, and sulfate may constitute a head portion of the anionic surfactant. Thereamong, an anionic surfactant containing sulfonate may be used.

A material having properties of a non-ionic surfactant may be used as a tail portion of the anionic surfactant. Although the material having properties of the non-ionic surfactant is not particularly restricted, a material including an alkyl group may be used. The material including the alkyl group may be polyalkylene oxide having 5 to 200 alkylene oxide repeat units. At this time, polyalkylene oxide may be at least one selected from the group consisting of polyethylene oxide, polypropylene oxide, and a polyethylene oxide-polypropylene oxide copolymer.

A typical example of the anionic surfactant is carboxyl methyl cellulose (CMC).

In addition, at least one selected from among oil-soluble polyamine, an oil-soluble amine compound, fatty acid, fatty alcohol, sorbitan fatty acid ester, tannic acid, and pyrogallic acid may be used as the dispersant.

The content of the dispersant may be 0.2 parts by weight to 10 parts by weight based on 100 parts by weight of the inorganic material. If the dispersant is included so as to account for less than 0.2 parts by weight based on 100 parts by weight of the inorganic material, the inorganic material may be easily precipitated. On the contrary, if the dispersant is included so as to account for greater than 10 parts by weight based on 100 parts by weight of the inorganic material, the force of adhesion of the coating to the porous substrate may be reduced or impurities may be generated as the result of reaction with the electrolytic solution at the time of manufacturing the secondary battery.

### Binder

The coating layer further includse a binder. The binder includes a copolymer of a humidification phase separable polymer and vinyl acetate.

Vinyl acetate may have an adhesive force of 200 gf/25mm or more under conditions of 60°C and 6.5 MPa.

The humidification phase separable polymer is not particularly restricted as long as the humidification phase separable polymer serves to stably fix the coating layer to the surface of the porous substrate while having a humidification phase separation effect. In the present invention, the copolymer has a structure of Chemical Formula 1. Herein, the following humidification phase separable polymers are also described, namely at least one selected from the group consisting of poly(methyl acrylate), poly(methyl methacrylate), poly(ethyl methacrylate), poly(2-hydroxyethyl methacrylate), and poly(acrylonitrile). The acrylate-based binder may be manufactured through copolymerization of a soft monomer having a low glass transition temperature T_{g} and a hard monomer having a high glass transition temperature in a predetermined ratio.

At this time, the humidification phase separable polymer may be phase-separated at a temperature of 25°C to 80°C and a relative humidity of 40% to 80%.

The conditions of the temperature range and the relative humidity range must be satisfied in order for the copolymer of the humidification phase separable polymer and vinyl acetate to have phase separation characteristics.

In addition, the humidification phase separable polymer may have a glass transition temperature of 100°C or less, and vinyl acetate may have a glass transition temperature of 10°C to 60°C. Since the copolymer of the humidification phase separable polymer and vinyl acetate having different glass transition temperatures is used, as described above, it is possible to obtain a binder having increased adhesive force.

The copolymer may be manufactured through copolymerization of the humidification phase separable polymer to vinyl acetate in a weight ratio of 80:20 to 20:80. Vinyl acetate may include a vinyl acetate monomer and polyvinyl acetate. Consequently, the vinyl acetate monomer or polyvinyl acetate and the humidification phase separable polymer may be copolymerized into the copolymer.

The copolymer may have a glass transition temperature of 60°C or less, specifically 40°C or less. If a difference in percentage between the humidification phase separable polymer and vinyl acetate of the copolymer is too great, specific performance of the binder, such as adhesive force, strength, and humidification phase separation characteristics of the binder, may be reduced.

The copolymer may be manufactured using various methods, such as emulsion polymerization and solution polymerization, and a manufacturing method is not particularly restricted. In addition, reaction conditions used in the method may be appropriately adjusted by those skilled in the art.

The copolymer may be a block copolymer. The block copolymer may form a periodically arranged structure, such as a sphere, a cylinder, a gyroid, an inverted structure, or a lamella, by phase separation.

The copolymer has the structure of Chemical Formula 1 below.

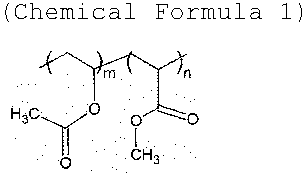

In Chemical Formula 1 above, m:n is 80:20 to 20:80, and the weight average molecular weight may be 100,000 to 500,000.

The weight ratio between the inorganic material to the copolymer, each of which is solid content constituting the coating layer, may be 60:40 to 95:5. If the content of copolymer is less than 10 weight% based on the solid content of the coating layer, sufficient adhesive force may not be obtained. If the content of copolymer is equal to or greater than 40 weight% based on the solid content of the coating layer, the copolymer may act as resistance of the separator, whereby performance of the battery may be reduced.

The content of the copolymer is merely an illustration, and the content of the copolymer, which is adjustable, is presented as an illustration in order to obtain a high-performance secondary battery desired in the present invention.

The coating layer of the separator may be configured to have a single layer structure or a multiple layer structure. In the case in which the coating layer of the separator has a multiple layer structure, the copolymer may be provided at an outermost layer of the coating layer, i.e. the coating layer facing the positive electrode or the negative electrode.

The present invention provides a secondary battery including the separator.

FIG. 1 is a side view of an electrode assembly including a positive electrode, a separator, and a negative electrode according to the present invention.

The secondary battery according to the present invention may include a positive electrode 100, a separator 200, and a negative electrode 300.

### Positive electrode

For example, the positive electrode 100 may be manufactured by applying a positive electrode mixture of a positive electrode active material, a conductive agent, and a binder to a positive electrode current collector 110 to form a positive electrode active material layer 120 on at least one surface of the positive electrode current collector 110. A filler may be further added to the positive electrode mixture as needed.

In general, the positive electrode current collector 110 is manufactured so as to have a thickness of 3 µm to 500 µm. The positive electrode current collector 110 is not particularly restricted as long as the positive electrode current collector exhibits high conductivity while the positive electrode current collector does not induce any chemical change in a battery to which the positive electrode current collector is applied. For example, the positive electrode current collector may be made of stainless steel, aluminum, nickel, or titanium. Alternatively, the positive electrode current collector may be made of aluminum or stainless steel, the surface of which is treated with carbon, nickel, titanium, or silver. Specifically, aluminum may be used. The positive electrode current collector 110 may have a micro-scale uneven pattern formed on the surface thereof so as to increase the force of adhesion to the positive electrode active material layer 120. The positive electrode current collector may be configured in any of various forms, such as a film, a sheet, a foil, a net, a porous body, a foam body, and a non-woven fabric body.

The positive electrode active material included in the positive electrode active material layer 120 may be constituted, for example, by a layered compound, such as a lithium nickel oxide (LiNiO₂), or a compound substituted with one or more transition metals; a lithium manganese oxide represented by the chemical formula Li₁₊ₓMn₂₋ₓO₄ (where x = 0 to 0.33) or a lithium manganese oxide, such as LiMnO₃, LiMn₂O₃, or LiMnO₂; a lithium copper oxide (Li₂CuO₂); a vanadium oxide, such as LiV₃O₈, LiFe₃O₄, V₂O₅, or Cu₂V₂O₇; an Ni-sited lithium nickel oxide represented by the chemical formula LiNi₁₋ₓMₓO₂ (where M = Co, Mn, Al, Cu, Fe, Mg, B, or Ga, and x = 0.01 to 0.3); a lithium manganese composite oxide represented by the chemical formula LiMn₂₋ₓMₓO₂ (where M = Co, Ni, Fe, Cr, Zn, or Ta, and x = 0.01 to 0.1) or the chemical formula Li₂Mn₃MO₈ (where M = Fe, Co, Ni, Cu, or Zn) ; LiMn₂O₄ in which a portion of Li in the chemical formula is replaced by alkaline earth metal ions; a disulfide compound; or Fe₂ (MoO₄)₃. However, the present invention is not limited thereto.

The conductive agent is generally added so that the conductive agent accounts for 0.1 weight% to 30 weight% based on the total weight of the mixture including the positive electrode active material. The conductive agent is not particularly restricted as long as the conductive agent exhibits high conductivity without inducing any chemical change in a battery to which the conductive agent is applied. For example, graphite, such as natural graphite or artificial graphite; carbon black, such as acetylene black, Ketjen black, channel black, furnace black, lamp black, or thermal black; conductive fiber, such as carbon fiber or metallic fiber; metallic powder, such as carbon fluoride powder, aluminum powder, or nickel powder; conductive whisker, such as zinc oxide or potassium titanate; a conductive metal oxide, such as titanium oxide; or a conductive material, such as a polyphenylene derivative, may be used as the conductive agent.

The binder, which is included in the positive electrode 100, is a component assisting in binding between the positive electrode active material and the conductive agent and in binding with the current collector. The binder is generally added in an amount of 0.1 weight% to 30 weight% based on the total weight of the mixture including the positive electrode active material. As examples of the binder, there may be used polyvinylidene fluoride, polyvinyl alcohol, carboxymethylcellulose (CMC), starch, hydroxypropylcellulose, regenerated cellulose, polyvinyl pyrrolidone, tetrafluoroethylene, polyethylene, polypropylene, ethylene-propylene-diene terpolymer (EPDM), sulfonated EPDM, styrene butadiene rubber, fluoro rubber, and various copolymers.

### Negative electrode

The negative electrode 300 may be formed by applying a negative electrode mixture including a negative electrode active material to at least one surface of a negative electrode current collector 310 and drying the same to form a negative electrode active material layer 320 on the negative electrode current collector 310, or may be constituted by only the negative electrode current collector 310. A binder or a conductive agent may be optionally further included as needed.

The negative electrode current collector 310 is generally manufactured so as to have a thickness of 3 µm to 500 µm. The negative electrode current collector 310 is not particularly restricted, as long as the negative electrode current collector exhibits high conductivity while the negative electrode current collector does not induce any chemical change in a battery to which the negative electrode current collector is applied. For example, the negative electrode current collector may be made of copper, stainless steel, aluminum, nickel, titanium, or sintered carbon. Alternatively, the negative electrode current collector may be made of copper or stainless steel, the surface of which is treated with carbon, nickel, titanium, or silver, or an aluminum-cadmium alloy. In addition, the negative electrode current collector may have a micro-scale uneven pattern formed on the surface thereof so as to increase the force of binding with the negative electrode active material layer 320, in the same manner as the positive electrode current collector 110. The negative electrode current collector may be configured in any of various forms, such as a film, a sheet, a foil, a net, a porous body, a foam body, and a non-woven fabric body.

The negative electrode active material layer 320 includes a negative electrode active material. As the negative electrode active material, for example, there may be used carbon, such as a non-graphitizing carbon or a graphite-based carbon; a metal composite oxide, such as LiₓFe₂O₃ (0≤x≤1), LiₓWO₂ (0≤x≤1), SnₓMe₁₋ₓMe'_{y}O_{z} (Me: Mn, Fe, Pb, Ge; Me': Al, B, P, Si, Group 1, 2, and 3 elements of the periodic table, halogen; 0<x≤1; 1≤y≤3; 1≤z≤8); lithium metal; a lithium alloy; a silicon-based alloy; a tin-based alloy; a metal oxide, such as SnO, SnO₂, PbO, PbO₂, Pb₂O₃, Pb₃O₄, Sb₂O₃, Sb₂O₄, Sb₂O₅, GeO, GeO₂, Bi₂O₃, Bi₂O₄, or Bi₂O₅; a conductive polymer, such as polyacetylene; or a Li-Co-Ni based material.

### Separator

The separator 200 according to the present invention may have the same construction as the separator described above. The separator 200 may have coating layers 220 and 230 formed on at least one surface of a porous substrate 210. At this time, it is preferable for the coating layer 220 to be formed respectively on the surface of the porous substrate 210 that faces the positive electrode and the surface of the porous substrate 210 that faces the negative electrode in order to increase the force of binding with the positive electrode 100 and the negative electrode 300.

The coating layer facing the positive electrode 220 and the coating layer facing the negative electrode 230 may have different constituents. The reason for this is that the force of binding between the positive electrode 100 and the separator 200 is lower than the force of binding between the negative electrode 300 and the separator 200. In order to increase the force of binding between the positive electrode 100 and the separator 200, therefore, the copolymer according to the present invention may be added to the coating layer facing the positive electrode 220, whereby it is possible to increase the force of adhesion of the coating layer facing the positive electrode 220.

Also, in the separator 200, the coating layer facing the positive electrode 220 and the coating layer facing the negative electrode 230 may be different in composition ratio of constituents from each other. At this time, the copolymer is used for each of the coating layer facing the positive electrode 220 and the coating layer facing the negative electrode 230; however, percentages of the copolymers used for the coating layer facing the positive electrode 220 and the coating layer facing the negative electrode 230 may be different from each other. Since the adhesive force of the copolymer is high, the amount of the copolymer used for the coating layer facing the negative electrode 230 may be less than the amount of the copolymer used for the coating layer facing the positive electrode 220.

In the above construction, the force of adhesion between the separator 200 and the negative electrode 100 may be 50 gf/25mm or more under conditions of 60°C and 6.5 MPa.

Also, in the present invention, adhesive force of the separator may be easily adjusted using the copolymer, whereby the force of adhesion between the positive electrode 100 and the separator 200 and the force of adhesion between the negative electrode 300 and the separator 200 may be adjusted so as to be similar to each other.

Hereinafter, the present invention will be described with reference to the following examples. These examples are provided only for easier understanding of the present invention and should not be construed as limiting the scope of the present invention.

### <Example 1>

Vinyl acetate and poly(methyl acrylate) were copolymerized in a ratio of 80:20 to form a first copolymer having a weight average molecular weight of 300,000. 6.5 weight% of the first copolymer, 91 weight% of alumina, and 2.5 weight% of a dispersant were dispersed in acetone to form a slurry. A porous substrate made of a polyolefin material having a thickness of 14.0 µm was prepared, and the slurry was applied to an electrode facing surface of the porous substrate to form a coating layer. Finally, a separator having the coating layer formed thereon while having a thickness of 15.5 µm was manufactured and used as Example 1.

### <Example 2>

In Example 2, a separator having a coating layer formed thereon while having a thickness of 15.6 µm was manufactured using the same method as in Example 1, except that vinyl acetate and poly(methyl acrylate) were copolymerized in a ratio of 60:40 to form a second copolymer and that 6.8 weight% of the second copolymer, 90.7 weight% of alumina, and 2.5 weight% of a dispersant were dispersed in acetone to form a slurry, compared to the separator according to Example 1.

### <Example 3>

In Example 3, a separator having a coating layer formed thereon while having a thickness of 15.4 µm was manufactured using the same method as in Example 1, except that vinyl acetate and poly(methyl acrylate) were copolymerized in a ratio of 40:60 to form a third copolymer, compared to the separator according to Example 1.

### <Comparative Example 1>

In Comparative Example 1, polyvinyl acetate having a weight average molecular weight of 500,000 was used alone, instead of the first copolymer according to the Example 1. At this time, a separator having a coating layer formed thereon while having a thickness of 14.9 µm was manufactured using the same method as in Example 1, except that 7.5 weight% of polyvinyl acetate, 90 weight% of alumina, and 2.5 weight% of a dispersant were dispersed in acetone to form a slurry.

### <Comparative Example 2>

In Comparative Example 2, a separator having a coating layer formed thereon while having a thickness of 15.1 µm was manufactured using the same method as in Example 1, except that the weight average molecular weight of polyvinyl acetate was 300,000 and that 7.4 weight% of polyvinyl acetate, 90.1 weight% of alumina, and 2.5 weight% of a dispersant were dispersed in acetone to form a slurry.

### <Comparative Example 3>

In Comparative Example 3, a separator having a coating layer formed thereon while having a thickness of 15.5 µm was manufactured using the same method as in Example 1, except that polyvinyl acetate having a weight average molecular weight of 500,000 and PVdF-HFP were mixed in a ratio of 8:2 to form a binder and that 6.4 weight% of the binder, 91.1 weight% of alumina, and 2.5 weight% of a dispersant were dispersed in acetone to form a slurry.

### <Comparative Example 4>

In Comparative Example 4, a separator having a coating layer formed thereon while having a thickness of 15.7 µm was manufactured using the same method as in Example 1, except that polyvinyl acetate having a weight average molecular weight of 300,000 and PVdF-HFP were mixed in a ratio of 8:2 to form a binder and that 6.2 weight% of the binder, 91.3 weight% of alumina, and 2.5 weight% of a dispersant were dispersed in acetone to form a slurry.

### <Experimental Example 1: Measurement of force of adhesion between negative electrode and separator>

In order to measure the force of adhesion between each of the separators manufactured according to Comparative Examples 1 to 3 and Examples 1 to 3 and a negative electrode, the separator and the negative electrode were adhered to each other at 60°C and 6.5 MPa to manufacture a half cell, and an end of the half cell was mounted to UTM equipment (LLOYD Instrument LF Plus). A force at 180° was applied to the half cell using the UTM equipment at a measurement speed of 300 mm/min in order to measure force necessary to separate the negative electrode and the separator from each other.

### <Experimental Example 2: Evaluation of air permeability>

Air permeability was measured according to ASTM D726-94. A Gurley value used herein, which is resistance to air flow, is measured using a Gurley densometer. An air permeability value described herein is indicated by time (seconds) taken for 100 cc of air to pass through a section of 1 in.² of each of the separators manufactured according to Comparative Examples and Examples under a pressure of 12.2 inH₂O, i.e. air permeation time.

The results measured according to Experimental Examples 1 and 2 are shown in Table 1 below.

**[Table 1]**

| | **Force of adhesion between negative electrode and separator (gf/25mm)** | **Air permeability (sec/100cc)** |
|---|---|---|
| **Comparative Example 1** | 0 | 3000 |
| **Comparative Example 2** | 0 | 3000 |
| **Comparative Example 3** | 24 | 277 |
| **Comparative Example 4** | 38 | 330 |
| **Example 1** | 80 | 261 |
| **Example 2** | 92 | 264 |
| **Example 3** | 105 | 263 |

It can be seen from Table 1 above that, in the case in which the copolymer according to the present invention is used, adhesive force is higher than in the case in which non-copolymerized polyvinyl acetate or the mixture of polyvinyl acetate and PVdF-HFP is used.

In addition, it can be seen that the force of adhesion with the electrode is increased in proportion to the percentage of polymethyl acrylate in the copolymer.

In addition, it can be seen that, in the case in which the copolymer according to the present invention is used, air permeability is higher than in the case in which the mixture of polyvinyl acetate and PVdF-HFP is used, whereby it is possible to improve performance of a secondary battery in the case in which the separator according to the present invention is used.

Those skilled in the art to which the present invention pertains will appreciate that various applications and modifications are possible within the category of the present invention based on the above description.

### (Description of Reference Numerals)

- 100:: Positive electrode
- 110:: Positive electrode current collector
- 120:: Positive electrode active material layer
- 200:: Separator
- 210:: Porous substrate
- 220:: Coating layer facing positive electrode
- 230:: Coating layer facing negative electrode
- 300:: Negative electrode
- 310:: Negative electrode current collector
- 320:: Negative electrode active material layer

### [Industrial Applicability]

As is apparent from the above description, a binder having high adhesive force is used for a separator according to the present invention, whereby the force of adhesion between a positive electrode and the separator and between a negative electrode and the separator is increased. In addition, a phenomenon of separation between vinyl acetate and a humidification phase separable polymer does not occur under a humidification condition, whereby the binder assists in forming an asymmetric structure with high porosity in a coating layer while being uniformly distributed.

In addition, since the binder having high adhesive force is used, consumption of the binder is lower than a conventional binder, whereby impregnability of the separator is improved and the capacity and lifespan of a secondary battery are increased.

In addition, the amount of an inorganic material in the coating layer may be increased, compared to the conventional art, whereby it is possible to obtain a separator having a thin coating layer while achieving a desired effect of the inorganic material. As a result, the density of the secondary battery is also increased.

## Claims

1. A high-adhesion separator for batteries, the high-adhesion separator comprising:
a porous substrate; and
a coating layer formed on at least one surface of the porous substrate, the coating layer comprising an inorganic material and a binder,
wherein the binder comprises a copolymer of a humidification phase separable polymer and vinyl acetate; and
wherein the copolymer has a structure of Chemical Formula 1 below: 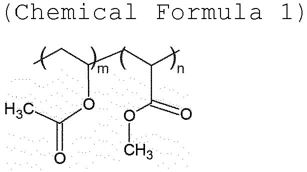
where m:n is 80:20 to 20:80.

2. The high-adhesion separator according to claim 1, wherein the humidification phase separable polymer has a glass transition temperature of 100°C or less, and
wherein vinyl acetate has a glass transition temperature of 10°C to 60°C,
wherein the glass transition temperature is determined by DSC.

3. The high-adhesion separator according to claim 1, wherein the copolymer is manufactured through copolymerization of the humidification phase separable polymer and vinyl acetate, wherein a weight ratio of the humidification phase separable polymer to the vinyl acetate is from 80:20 to 20:80.

4. The high-adhesion separator according to claim 1, wherein the humidification phase separable polymer is phase-separated at a temperature of 25°C to 80°C and a relative humidity of 40% to 80%.

5. The high-adhesion separator according to claim 1, wherein a composition ratio between the inorganic material to the copolymer in the coating layer is 60:40 to 90:10.

6. A secondary battery comprising:
a positive electrode;
a negative electrode; and
the separator according to any one of claims 1 to 5.

7. The secondary battery according to claim 6, wherein the separator comprises a coating layer facing the positive electrode and a coating layer facing the negative electrode, wherein the coating layer facing the positive electrode and the coating layer facing the negative electrode have different constituents.

8. The secondary battery according to claim 7, wherein the copolymer is included in only the coating layer facing the positive electrode.

9. The secondary battery according to claim 6, wherein a coating layer of the separator facing the positive electrode and a coating layer of the separator facing the negative electrode are different in composition ratio of constituents from each other.

10. The secondary battery according to claim 9, wherein the coating layer facing the positive electrode comprises a larger amount of the copolymer than the coating layer facing the negative electrode.

11. The secondary battery according to claim 6, wherein a force of adhesion between the separator and the negative electrode is 0.5 N (50 gf)/25mm or more under conditions of 60°C and 6.5 MPa as measured according to the description.

## Patentansprüche

1. Separator mit hoher Haftfähigkeit für Batterien, wobei der Separator mit hoher Haftfähigkeit folgendes umfasst:
ein poröses Substrat; und
eine Beschichtungsschicht, die auf mindestens einer Oberfläche des porösen Substrats ausgebildet ist, wobei die Beschichtungsschicht ein anorganisches Material und ein Bindemittel umfasst,
wobei das Bindemittel ein Copolymer aus einem in der Befeuchtungsphase trennbaren Polymer und Vinylacetat umfasst; und
wobei das Copolymer eine Struktur der folgenden chemischen Formel 1 aufweist: 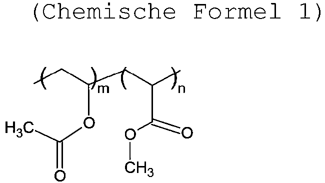
worin m:n 80:20 bis 20:80 beträgt.

2. Separator mit hoher Haftfähigkeit gemäß Anspruch 1, wobei das in der Befeuchtungsphase trennbare Polymer eine Glasübergangstemperatur von 100°C oder weniger aufweist, und
wobei Vinylacetat eine Glasübergangstemperatur von 10°C bis 60°C aufweist,
wobei die Glasübergangstemperatur durch DSC bestimmt wird.

3. Separator mit hoher Haftfähigkeit gemäß Anspruch 1, wobei das Copolymer durch Copolymerisation des in der Befeuchtungsphase trennbaren Polymers und Vinylacetats hergestellt wird, wobei ein Gewichtsverhältnis des in der Befeuchtungsphase trennbaren Polymers zu Vinylacetat 80:20 bis 20:80 beträgt.

4. Separator mit hoher Haftfähigkeit gemäß Anspruch 1, wobei das in der Befeuchtungsphase trennbare Polymer bei einer Temperatur von 25°C bis 80°C und einer relativen Luftfeuchtigkeit von 40% bis 80% phasengetrennt wird.

5. Separator mit hoher Haftfähigkeit gemäß Anspruch 1, wobei das Zusammensetzungsverhältnis zwischen dem anorganischen Material und dem Copolymer in der Beschichtungsschicht 60:40 bis 90:10 beträgt.

6. Sekundärbatterie, umfassend:
eine positive Elektrode;
eine negative Elektrode; und
den Separator gemäß mindestens einem der Ansprüche 1 bis 5.

7. Sekundärbatterie gemäß Anspruch 6, wobei der Separator eine der positiven Elektrode zugewandte Beschichtungsschicht und eine der negativen Elektrode zugewandte Beschichtungsschicht umfasst, wobei die der positiven Elektrode zugewandte Beschichtungsschicht und die der negativen Elektrode zugewandte Beschichtungsschicht unterschiedliche Bestandteile aufweisen.

8. Sekundärbatterie gemäß Anspruch 7, wobei das Copolymer nur in der der positiven Elektrode zugewandten Beschichtungsschicht enthalten ist.

9. Sekundärbatterie gemäß Anspruch 6, wobei sich die der positiven Elektrode zugewandte Beschichtungsschicht des Separators und die der negativen Elektrode zugewandte Beschichtungsschicht des Separators in ihrem Zusammensetzungsverhältnis der Bestandteile voneinander unterscheiden.

10. Sekundärbatterie gemäß Anspruch 9, wobei die der positiven Elektrode zugewandte Beschichtungsschicht eine größere Menge des Copolymers umfasst als die der negativen Elektrode zugewandte Beschichtungsschicht.

11. Sekundärbatterie gemäß Anspruch 6, wobei die Haftkraft zwischen dem Separator und der negativen Elektrode unter Bedingungen von 60°C und 6,5 MPa gemäß der Beschreibung gemessen 0,5 N (50 gf)/25 mm oder mehr beträgt.

## Revendications

1. Séparateur hautement adhésif pour batteries, ledit séparateur hautement adhésif comprenant :
un substrat poreux ; et
une couche de revêtement formée sur au moins une surface du substrat poreux, la couche de revêtement comprenant un matériau inorganique et un liant,
dans lequel le liant comprend un copolymère d'un polymère séparable en phase d'humidification et d'acétate de vinyle ; et
dans lequel le copolymère présente une structure de Formule Chimique 1 ci-dessous : 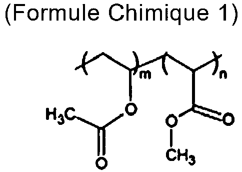 dans laquelle m:n vaut de 80:20 à 20:80.

2. Séparateur hautement adhésif selon la revendication 1, dans lequel le polymère séparable en phase d'humidification présente une température de transition vitreuse de 100 °C ou moins, et
dans lequel l'acétate de vinyle présente une température de transition vitreuse de 10 °C à 60 °C,
dans lequel la température de transition vitreuse est déterminée par DSC.

3. Séparateur hautement adhésif selon la revendication 1, dans lequel le copolymère est fabriqué par copolymérisation du polymère séparable en phase d'humidification et de l'acétate de vinyle, dans lequel un rapport pondéral du polymère séparable en phase d'humidification sur l'acétate de vinyle est de 80:20 à 20:80.

4. Séparateur hautement adhésif selon la revendication 1, dans lequel le polymère séparable en phase d'humidification est séparé en phase à une température de 25 °C à 80 °C et à une humidité relative de 40 % à 80 %.

5. Séparateur hautement adhésif selon la revendication 1, dans lequel un rapport de composition entre le matériau inorganique sur le copolymère dans la couche de revêtement est de 60:40 à 90:10.

6. Batterie secondaire comprenant:
une électrode positive ;
une électrode négative ; et
le séparateur selon l'une quelconque des revendications 1 à 5.

7. Batterie secondaire selon la revendication 6, dans laquelle le séparateur comprend une couche de revêtement faisant face à l'électrode positive et une couche de revêtement faisant face à l'électrode négative, dans laquelle la couche de revêtement faisant face à l'électrode positive et la couche de revêtement faisant face à l'électrode négative présentent des constituants différents.

8. Batterie secondaire selon la revendication 7, dans laquelle le copolymère est inclus uniquement dans la couche de revêtement faisant face à l'électrode positive.

9. Batterie secondaire selon la revendication 6, dans laquelle une couche de revêtement du séparateur faisant face à l'électrode positive et une couche de revêtement du séparateur faisant face à l'électrode négative sont différentes en termes de rapport de composition de constituants l'une par rapport à l'autre.

10. Batterie secondaire selon la revendication 9, dans laquelle la couche de revêtement faisant face à l'électrode positive comprend une plus grande quantité du copolymère que la couche de revêtement faisant face à l'électrode négative.

11. Batterie secondaire selon la revendication 6, dans laquelle une force d'adhérence entre le séparateur et l'électrode négative est de 0,5 N (50 gf)/25 mm ou plus dans des conditions de 60 °C et de 6,5 MPa, telle que mesurées selon la description.
